# EUROPEAN PATENT SPECIFICATION

(11) **EP 2 463 325 B1**
(45) Date of publication and mention of the grant of the patent: **07.08.2013**
(21) Application number: 10194357.9
(22) Date of filing: 09.12.2010
(51) Int. Cl.: C08G 77/445, C08G 77/452, C08G 77/455, C09D 183/10

(54) **Coating compositions containing silane-terminated polysiloxanes**
Beschichtungszusammensetzungen mit silan-terminierten Polysiloxanen
Compositions de revêtement comprenant des polysiloxanes à terminaison silane

(43) Date of publication of application: 13.06.2012
(73) Proprietor: 3M Innovative Properties Company, St. Paul, MN 55133-3427 (US)
(72) Inventor: Audenaert, Frans, 2070 Zwijndrecht (BE)
(74) Representative: Kurz, Arnd

(56) References cited:
- US-A1- 2004 087 752
- US-A1- 2008 306 208

## Description

### Field

The present disclosure relates to silane-terminated polysiloxanes, to methods of making them, and to coating compositions containing them. The present disclosure further relates to methods of coating and to coated articles.

### Background

Certain surfaces, for example outside components of vehicles may be subject to accumulated dirt exposure and scratching from repeated cleaning. In addition to dirt accumulation and scratching, certain surfaces, in particular surfaces of public use, are exposed to vandalism like scratching or graffiti. Typical examples include indoor and/or outdoor surfaces of public transport vehicles like trains, busses and trams, public waste bins and also sound barriers on roads. To maintain the original appearance and to protect the outer surface from staining and damage or to facilitate stain or dirt removal protective coatings are applied. Such coating provide the surfaces with repellency properties, by which is meant that they prevent dirt accumulation and/or facilitate dirt removal. Many such protective coatings are based on organic silanes or silane-modified resins as described, for example, in US 7060760, WO 2010/036705 and US 2008/0306208 A1.

While silane based coatings show good repellency properties there is a continued need for specifically designed coating compositions, in particular for silane-based coatings. For example, there is a need of such coatings that maintain their good repellency properties, for example their wetting properties, even after a prolonged exposure to UV irradiation. This would reduce the frequency by which the coatings exposed to sun light had to be renewed.

### Summary

In the following there is provided a polysiloxane comprising a polysiloxane unit having from 5 to 250 -SiO- units and terminal groups T of the general formula

-E-CH₂CH₂-N(R)-Q₄- Si(R₆)ₙY₃₋ₙ

wherein
E represents -O-C(=O)- or -NH-C(=O)- ,
R represents independently per unit H, an alkyl group or a group Q5-Si(R6)nY3-n, each Y independently represents a hydrolysable group and R6 represents an alkyl group or an aryl group and n is 0 or 1, and Q4 and Q5 represent a chemical bond or identical or different linking groups containing 1 to 10 carbon atoms which may contain sulphur, nitrogen and/or oxygen atoms and which do not contain a urethane group.

In another aspect there is provided a coating composition comprising
a. the polysiloxane above and
b. at least one hydrolysable silane, or a condensation product of a hydrolysation reaction of (a) or (b), or (a) and (b) with the proviso that the condensation product is such that not all hydrolysable groups have been consumed.

In a further aspect there is provided the use of the polysiloxanes above for improving the UV stability of a silane-based coating.

In yet another aspect there is provided a method of making the polysiloxanes above comprising reacting
i.) a polysiloxane having at least one terminal amine, alcohol or thiol group,
ii.) a compound having at least one α,β-unsaturated carbonyl group, further optionally comprising an isocyanate reactive group,
iii.) a silane compound having a primary or secondary amino group and at least one hydrolysable group,
   according to one of the following reaction schemes:
   a) a one step reaction of i.), ii.) and iii.);
   b) a multistep reaction of first reacting i.) and ii.) followed by reacting iii.) with the reaction product of i.) and ii.);
   c) a multistep reaction of first reacting ii.) and iii.), followed by reacting i.) with the reaction product of ii.) and iii.);
with the proviso that at least one of the reaction schemes comprises a Michael addition reaction.

There is also provided a substrate having at least one surface containing a coating obtained by curing the coating composition above.

### Detailed description

Before any embodiments of this disclosure are explained in detail, it is to be understood that the disclosure is not limited in its application to the details of compositions and the arrangement of components set forth in the following description. The invention is capable of other embodiments and of being practiced or of being carried out in various ways. Also, it is to be understood that the phraseology and terminology used herein is for the purpose of description and should not be regarded as limiting. Contrary to the use of "consisting", the use of "including," "containing", "comprising," or "having" and variations thereof is meant to encompass the items listed thereafter, equivalents thereof and further items. The word "consisting of" is meant to be of limiting scope and is meant to encompass only the items listed thereafter and equivalents thereof but not any additional items.

The use of "a" or "an" is meant to encompass "one or more". Any numerical range recited herein is intended to include all values from the lower value to the upper value of that range. For example, a concentration range of from 1% to 50% is intended to be an abbreviation and to expressly disclose the values between the 1% and 50%, such as, for example, 2%, 40%, 10%, 30%, 1.5 %, 3.9 % and so forth.

The present disclosure provides silane-terminated polysiloxanes. The polysiloxanes have at least one polysiloxane moiety having from 5 to 250 -SiO-units. The polysiloxanes further contain terminal hydrolysable silane groups (also referred herein to as groups T). The polysiloxanes are substantially free of urethanes. Substantially free of urethanes means that the polysiloxanes do not contain any urethanes or the number ratio of groups T to urethane groups is greater than 5 : 1 or even greater than 10:1. This means there are at least 5 times or at least 10 times more groups T present in the polysiloxanes than urethane groups.

The hydrolysable silane groups (groups T) of the polysiloxanes are of the general formula

-E-CH₂CH₂-N(R)-Q₄-Si (R₆)nY₃₋ₙ

wherein
E represents -O-C(=O)- or -NH-C(=O)-,
R represents independently per group T either H, an alkyl group or a group Q5-Si(R6)nY3-n. Y independently represents a hydrolysable group. R6 independently represents an alkyl group or an aryl group and n is 0 or 1.
Q4 and Q5 independently represent a chemical bond or identical or different hydrocarbon groups. The hydrocarbon groups may contain 1 to 10 carbon atoms, They may contain sulphur, nitrogen and/or oxygen atoms but do not contain urethane groups.

The silane-terminated polysiloxanes can be used as coatings or as an additive in coating compositions. Coatings obtained with these polysiloxanes provide stain repellency and easy-to-clean properties to the coated surface. These properties can be maintained even over a prolonged exposure to UV irradiation, which makes such coatings particular suitable to application on (outdoor) surfaces exposed to weathering and in particular sun light.

The silane-terminated polysiloxanes provided herein comprise the reaction products of a reaction of at least the following compounds (reactants): i) (polysiloxanes having a terminal nucleophilic group), ii) (α,β unsaturated carbonyls), and iii) (silanes), which will be described in greater detail below. The reaction comprises a Michael addition reaction. As used herein above and below the term 'Michael addition reaction' refers to a nucleophilic addition reaction of a compound having a primary or secondary amino function to an alpha, beta unsaturated carbonyl compound, thus forming a saturated β-amino ester or β -amino amide group.

The reactions can be carried out according to various reaction schemes.

In one embodiment the reaction is a one step reaction of the reactants described above, i.e., a one step reaction of
i) a polysiloxane having at least one terminal nucleophilic group,
ii) a compound having at least one α,β-unsaturated carbonyl group, optionally comprising an amino or hydroxyl group
iii) a silane compound having a primary or a secondary amino group and at least one hydrolysable group, wherein the reaction involves at least one Michael addition reaction.

Preferably, compound ii) comprises more than one α,β-unsaturated carbonyl group.

The reaction can be carried out under conditions known for Michael addition reactions. The reaction can be done without solvent or in the presence of a solvent, which is preferred. Suitable solvents include 1-hexanol, tetrahydrofuran, (THF), ethyl acetate, acetone, methyl isobutyl ketone, toluene and halogenated solvents, such as C₄F₉OCH₃, C₄F₉OC₂H₅ and trifluorotoluene. The reaction is typically done in the presence of a catalyst. Suitable catalysts include LiClO₄, 1,8 diazabicyclo [5.4.0] undec-7-ene] (DBU), stannous octanoate, 2,6-di-t.butyl-4-methylphenol (BHT).

In an alternative embodiment, the reaction is carried out in a multi step reaction, with the proviso that at least one of the reaction steps comprises a Michael addition reaction. For example, in a first alternative embodiment, compounds i) and ii) can be reacted in a first step, followed by reaction with compound iii). The first step may or may not comprise a Michael addition reaction.

Suitable examples of a first reaction step of this first alternative embodiment include reaction of a polysiloxane diol or diamine with acryloyl chloride to form at least one reaction product represented by a polysiloxane diol diacrylate or polysiloxane diacrylamide respectively.

Further examples include the reaction of a polysiloxane diol with a polyfunctional acrylate providing at least one reaction product represented by a polysiloxane polyacrylate. Another example comprises the reaction of a polysiloxane diamine with a polyacrylate forming a polysiloxane polyacrylate, comprising at least one β-amino ester group formed by the Michael addition of the amine to the acrylate.

In a second step, the reaction product of the first step is further reacted with compound iii). In a preferred embodiment, the reaction product of the first step does not have to be separated and the second reaction is performed in the same reaction medium as the first step.

The second step typically comprises a Michael addition of the primary or secondary amino group of compound iii) to the acrylate or acrylamide formed in the first step.

In a second alternative embodiment compounds ii) and iii) can be reacted in a first step, followed by reaction with compound i). This first reaction step typically comprises a Michael addition reaction of the primary or secondary amino group of compound iii) to the α ,β-unsaturated carbonyl group of compound ii).

Suitable examples of the first step of this second alternative embodiment include a reaction of an acrylate (compound ii)) with compound iii) to form at least one reaction product represented by a silane compound comprising at least one β-amino ester group formed by the Michael addition of the primary or secondary amine to the acrylate.

In a second step, the silane comprising at least one β-amino ester group can be further reacted with compound i). For example, the reaction with a polysiloxane diamine, provides at least one reaction product represented by a polysiloxane β-amino amide.

In a third alternative and not preferred embodiment, compound i) can first be reacted with a polyfunctional isocyanate, followed by reaction with compound ii) having an amino or hydroxyl group. This compound is then further reacted with compound iii).

Suitable examples of this embodiment comprise the reaction of a polyisocyanate with a polysiloxane diol or diamine, followed by a reaction with a (poly)acrylate comprising an amino or hydroxyl group. This reaction provides at least one reaction product represented by a polysiloxane urethane polyacrylate or polysiloxane urea polyacrylate.

In a further step, this intermediate is then reacted with compound iii) via a Michael addition reaction. The amounts of isocyanates, however, is chosen so as such keep the amounts of urethanes created by the reaction low compared to the amounts of terminal silane groups, such that the silane-terminated polysiloxanes remain substantially urethane free as described above.

The reactions are typically carried out in a solvent and under conditions known in the art.

The reactants, the reaction products and their uses and applications will now be described in greater detail.

### Reactants:

### i) Polysiloxanes comprising a terminal nucleophilic end group

The polysiloxanes comprising terminal nucleophilic end groups comprise between 5 and 250 -SiO- units. The polysiloxanes can have a linear polymer backbone or a branched structure wherein the polymer backbone comprises side chains.

Polysiloxanes with terminal nucleophilic end groups comprise at least one, preferably more than one (e.g. at least 2) terminal amine groups, alcohol groups, thiol groups or combinations thereof. Typically, they comprise repeating units of the formula -Si(R₁R₂)-O-, optionally in combination with repeating units of the formula -Si(R₅R₇)-O-, wherein the groups R1, R2 and R5 independently represent an alkyl group or an aryl group. R7 represents an alkyl group containing an amine, alcohol or thiol group, preferably at a terminal position. This way silane-terminated groups can be introduced at side chains in the molecule.

Suitable polysiloxanes include linear or branched polydialkyl siloxanes, polyalkylaryl siloxanes or polydiarylsiloxanes, wherein the amine, alcohol or thiol groups are situated at the end of the polymer chain, i.e. in the end group of the polymer backbone and/or in a terminal portion of side chains. In a particularly suitable embodiment, the amine, alcohol or thiol groups are comprised in the end groups of the polysiloxane backbone.

Representative examples of polysiloxanes comprising a terminal nucleophilic group include those of the general formula:

A'-X'-[Si(R₅R₇)-O]_{q}-[Si(R₁R₂)-O]ₚ-Si(R₃R₄)-X-A

wherein p represents an integer between 5 and 200; q is 0 or an integer between 1 and 50 and p+q is an integer between 5 and 250; A and A' independently represent H, an amine group, an alcohol group or a thiol group. X and X' independently represent a divalent linking group, preferably comprising an alkylene group. Each R1, R2, R3, R4 and R5 independently represents an alkyl group or an aryl group. R7 represents an alkyl group containing an amine, alcohol or thiol group, preferably at a terminal position. In the above formula at least one of A, A' or A" is not H.

Particular useful examples of polysiloxanes include hydroxyl terminated polysiloxanes, such as, for example, hydroxyl terminated polydialkylsiloxanes. Specific examples include those of the formula:

HO-(CH₂)ₐ-[Si(R₁R₂)O]ₚ-Si(R₃R₄)-(CH₂)_{b}-OH

wherein a and b are independently 1,2,3 or 4, p represents a value of 5 to 200 and each R1, R2, R3 and R4 independently represents an alkyl group of 1 to 4 carbon atoms, preferably a methyl group.

Further useful examples include amino group terminated polydialkylsiloxanes. Specific examples include those of the formula:

NHR₈-(CH₂)ₐ-[Si(R₁R₂)O]ₚ-Si(R₃R₄)-(CH₂)_{b}NHR₈,

wherein a, b, p and R1, R2, R3 and R4 are as defined above, R8 and R8' independently represents H or an alkyl group.

Polysiloxanes having amine, alcohol or thiol end groups are commercially available for example under the trade designation IM11, IM15, IM22, IM47, FLUID NH 40D, FLUID NH 130D, FLUID OH 15D, FLUID OH 40D (from Wacker, Germany), KF-857, KF-8001, X-223939A, X-22-160AS, KF-6001 and KF-6002 (from Shin-Etsu, Japan).

### ii) α,β-unsaturated carbonyls

Compounds having at least one α,β-unsaturated carbonyl group preferably comprise at least one acrylic group. Suitable examples include acrylic acid, acryloyl chloride, acrylic anhydride, monofunctional and polyfunctional acrylates.

Suitable examples of monofunctional acrylates include methyl acrylate, ethyl acrylate and butyl acrylate.

Suitable examples of polyfunctional acrylates include, for example, 1,4-butanediol diacrylate, 1,6-hexanediol diacrylate, tripropyleneglycol diacrylate, polyethyleneglycol diacrylate, trimethylolpropane triacrylate, ethoxylated triacrylates (e.g., ethoxylated trimethylolpropane triacrylate), propoxylated triacrylates (e.g., propoxylated glycerol triacrylate) and tris(2-hydroxyethyl)isocyanurate triacrylate. Further suitable acrylates include for example ditrimethylolpropane tetraacrylate, dipentaerythritol pentaacrylate, pentaerythritol tetraacrylate, ethoxylated pentaerythritol tetraacrylate.

In one particular embodiment, the compound having at least one α,β-unsaturated carbonyl group further comprises an amino group or an alcohol group. Useful examples include monofunctional and polyfunctional acrylates having a hydroxyl group or an amino group, such as for example hydroxyethyl acrylate, 2-hydroxypropyl acrylate, pentaerythritol triacrylate and dipentaerythritol pentaacrylate.

Particularly suitable examples of compounds having at least one α,β-unsaturated carbonyl group include acrylic acid, acryloylchloride, methyl acrylate, trimethylolpropane triacrylate, ditrimethylolpropane tetraacrylate, ethoxylated trimethylolpropane triacrylate, pentaerythritol triacrylate and hydroxyethyl acrylate.

### iii) silane compounds

The silane compounds have a primary or a secondary amino function and contain at least one hydrolysable group. They can be represented by the formula

NHR-Q₄-Si(Y)₃₋ₙ(R₆)ₙ

wherein R represents a H or an alkyl group or a group Q'₄-Si(Y)₃₋ₙ(R₆)ₙ. Q4 and Q4' independently represent an organic linking group and n is 0, 1 or 2. Each R6 independently represents an alkyl group, preferably a C1-C8 alkyl group (such as methyl, ethyl, propyl and iso-octyl) or an C1-C8 alkyl group containing a cyclic hydrocarbon structure (such as cycloalkyl, e.g. cyclohexyl or cyclopentyl), an aryl group (preferably containing 6 to 20 carbon atoms which may optionally be substituted by one or more C1-C4 alkyl groups or halogens or mixtures thereof, such as phenyl), an alkylaryl group (preferably containing 7 to 12 carbon atoms) or an aralkyl group (preferably containing 7 to 12 carbon atoms). The groups Y independently represent hydrolysable groups.

As used herein above and below the term 'hydrolysable group' is used for a group which either is directly capable of undergoing condensation reactions under appropriate conditions or which is capable of hydrolyzing under appropriate conditions, thereby yielding a compound, which is capable of undergoing condensation reactions. Hydrolysis and condensation reactions typically occur in wet or humid conditions, optionally in the presence of a catalyst.

Examples of hydrolysable groups include halide groups, such as chlorine, bromine, iodine or fluorine, alkoxy groups -OR' (wherein R' represents an alkyl group, preferably containing 1 to 6, more preferably 1 to 4 carbon atoms and which may optionally be substituted by one or more halogen atoms), acyloxy groups -O-(CO)-R" (wherein R" is as defined for R'), aryloxy groups -OR"' (wherein R"' represents an aryl moiety, preferably containing 6 to 12, more preferably containing 6 to 10 carbon atoms, which may be optionally substituted by one or more substituents independently selected from halogens and C1-C4 alkyl groups which may optionally be substituted by one or more halogen atoms). In the above formulae R', R", and R"' may include branched structures.

Particularly suitable examples of hydrolysable groups include halogens, such as chlorine, alkoxy groups, such as methoxy, ethoxy, propoxy, acetoxy and butoxy groups. Particularly preferred hydrolysable groups include methoxy and ethoxy groups.

The linking groups Q4 and Q4' typically represent a chemical bond or an alkylene group (preferably containing 1 to 10, more preferably containing 1 to 6 carbon atoms), which may further contain nitrogen, oxygen or sulphur atoms. Q4 and Q4' may also represent an arylene (preferably containing 6 to 20 carbon atoms which may be substituted by one or more C1-C4 alkyl groups, halogen atoms) or mixtures thereof.

Q4 and Q4' do not contain urethane groups.

In a particular preferred embodiment the silane compounds can be represented by the formula:

H₃₋ₕN-[(CH₂)ₛ-Si(R₆)ₙY₃₋ₙ]ₕ

wherein each R6 independently represents an alkyl group of 1 to 4 carbon atoms or an aryl group, each Y independently represents a hydrolisable group, s is 1, 2, 3 or 4, h is 1 or 2 and n is 0 or 1.

Examples of useful compounds according to the above formula include bis(3-trimethoxysilyl propyl)amine, bis(3-triethoxysilyl propyl)amine, 3-aminopropyltrimethoxysilane and 3-aminopropyltriethoxysilane. A particularly preferred compound is bis(3-trimethoxysilyl propyl)amine.

### iv) polyisocyanates

In one (although not preferred) embodiment, the reaction may involve the use a polyisocyanate as a reactant. The use of polyisocyanates is restricted to amounts to make sure that the silane-terminated polysiloxanes remain substantially urethane free as described above. Useful polyisocyanates include difunctional isocyanates that may be an aliphatic, alicyclic or aromatic. Examples include e.g., isophorone diisocyanate (IPDI), hexamethylene diisocyanate, 2,2,4-trimethyl-1,6-hexamethylene diisocyanate, dicyclohexylmethane-4,4'-diisocyanate; 4,4'- methylenediphenylene diisocyanate, 4,6-di-(trifluoromethyl)-1,3-benzene diisocyanate, 2,4-toluene diisocyanate, 2,6-toluene diisocyanate, o, m, and p-xylylene diisocyanate, 4,4'-diisocyanatodiphenylether, 3,3'-dichloro-4,4'- diisocyanatodiphenylmethane, 4,5'-diphenyl diisocyanate, 4,4'-diisocyanatodibenzyl, 3,3'-dimethoxy-4,4'-diisocyanatodiphenyl, 3,3'-dimethyl-4,4'-diisocyanatodiphenyl, 2,2'-dichloro-5,5'-dimethoxy-4,4'-diisocyanato diphenyl, 1,3-diisocyanatobenzene, 1,2-naphthylene diisocyanate, 4-chloro-1,2-naphthylene diisocyanate, 1,3- naphthylene diisocyanate, and 1,8-dinitro-2,7-naphthylene diisocyanate.

### Reaction products (silane-terminated polysiloxanes)

The reaction products obtained by the reaction of the reactants described above yield polysiloxanes (silane-terminated polysiloxanes) comprising from 5 to 250 -SiO- units and having terminal groups of the general formula

-E-CH₂CH₂-N(R)-Q₄-Si(R₆)ₙY₃₋ₙ

wherein E represents -O-C(=O)- or -NH-C(=O)-, R represents independently per unit H, an alkyl group or a group Q5-Si(R6)nY3-n.

Each Y independently represents a hydrolysable group as described above. R6 represents an alkyl group or an aryl group and n is 0 or 1. Q4 is as defined above. Q5 is defined as Q4 but independently chosen from Q4.

The terminal groups may be present not only as single terminal groups but also as a plurality.

For example, in one embodiment the reaction products (silane-terminated polysiloxanes) may comprise polysiloxanes according to the general formula: 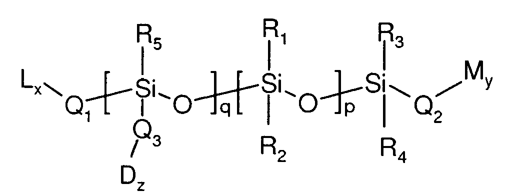 wherein Q1, Q2 and Q3 each independently represent a chemical bond or linking groups containing 1 to 10 carbon atoms which may or may not contain sulphur, nitrogen and/or oxygen atoms. Q1, Q2 and Q3 may contain urethane groups, but preferably they do not. Preferably Q1, Q2 and Q3 are urethane-free, linear or branched alkylene groups optionally containing a nitrogen, oxygen or sulfar atom linking them to a Si atom and/or to groups L, M or D. R1, R2, R3, R4 and R5 independently represent an alkyl group or an aryl group ; p represents an integer between 5 and 200 ; q is 0 or an integer between 1 and 50 and p+q is an integer between 5 and 250 ; x, y and z represent, independently from each other integers of 1 or higher,
L, M and D independently represent H or a group
-E-CH₂CH₂-N(R)-Q₄- Si (R₆)ₙY₃₋ₙ as defined above (group T), with the proviso that at least one of L, M or D is not H.

In a preferred embodiment, the silane-terminated polysiloxanes are represented by the general formula: 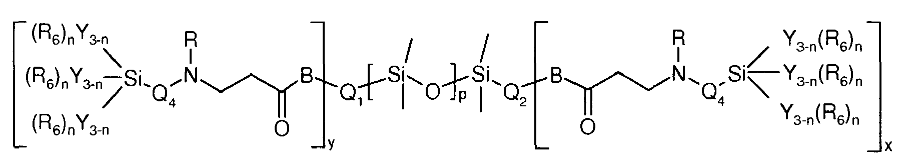 wherein B is O or NR₇ with R₇ being H or an alkyl group ; each group Y independently represents a hydrolysable group, R is H or an alkyl group or a group -Q₅-Si (R₆)ₙY₃₋ₙ, as defined above; each Q1, Q2, Q4, and Q5 independently represent a linking group as defined above; p is an integer between 5 and 200 and x and y are integers between 1 and 10.

It is understood that the polysiloxanes may be complex mixtures and may contain mixtures of the polymers described above or mxitures of the polymers above and other reaction products or by-products. It is also understood that the specific composition of the polysiloxane units depends on the polysiloxanes used as reactants. Consequently, the silane-terminated polysiloxanes comprise a polysiloxane unit comprising between 5 and 250 -SiO- units. The polysiloxane unit can have a linear polymer backbone or a branched structure wherein the polymer backbone comprises side chains. Typically, they comprise repeating units of the formula -Si(R₁R₂)-O-, optionally in combination with repeating units of the formula -Si(R₅R₇)-O -, wherein the groups R1, R2 and R5 independently represent an alkyl group or an aryl group and R7 represents a side chain.

Suitable polysiloxanes units include linear or brached polydialkyl siloxane units, polyalkylaryl siloxane units or polydiarylsiloxane units.

### Uses of silane-terminated Polysiloxanes

The silane-terminated polysiloxanes described herein can be used in a coating composition. The coating composition comprises the polymer composition as described above and, additionally, at least one hydrolysable silane or a mixture thereof.

In a preferred embodiment, said additional hydrolysable silane corresponds to the formula (I):

QₙSiG₄₋ₙ (I)

wherein Q represents a hydrocarbon group that can optionally be substituted, G represents a hydrolysable group and n is 0, 1 or 2.

The term 'hydrolysate' as used herein denotes a compound that is formed by hydrolysis, i.e. when the hydrolysable silane has reacted with water.

The term "condensate" as used herein denotes a compound formed by the reaction linking two compounds by eliminating H₂O.

For example the compound Q₃SiOMe contains a hydrolysable methoxy (OMe) groups which can react with water to give Q₃SiOH and HOMe (methanol). Two compounds Q3SiOMe can react with each other in a condensation reaction to form Q₃Si-O-SiQ₃ by eliminating H₂O.

The hydrolysable groups G are preferably such that they yield a compound that is capable of undergoing a condensation reaction. Preferably, the hydrolysable groups upon hydrolysis yield groups capable of undergoing condensation reactions, such as hydroxyl groups.

Hydrolysis and condensation reactions typically occur in wet or humid conditions, optionally in the presence of a condensation catalyst. Examples of hydrolysable groups are as given above and include halide groups, such as chlorine, bromine, iodine or fluorine, alkoxy groups (-OR' wherein R' represents an alkyl group, preferably containing 1 to 6, more preferably 1 to 4 carbon atoms and which may optionally be substituted by one or more halogen atoms), acyloxy groups (-O-(CO)-R" wherein R" is as defined for R'), aryloxy groups (-OR"' wherein R'" represents an aryl moiety, preferably containing 6 to 12, more preferably containing 6 to 10 carbon atoms, which may be optionally substituted by one or more substituents independently selected from halogens and C1-C4 alkyl groups which may optionally be substituted by one or more halogen atoms). In the above formulae R', R", and R'" may include branched structures.

Particular examples of hydrolysable groups include alkoxy groups, such as methoxy, ethoxy, propoxy and butoxy groups, chlorine and an acetoxy group. Particularly preferred hydrolysable groups include methoxy and ethoxy groups.

The hydrocarbon groups Q may be the same or different and are generally not capable of hydrolyzing under the conditions listed above. For example, the hydrocarbon groups Q may be independently selected from an aliphatic hydrocarbon group, for example a C1-C30 alkyl group, which may be a straight chain or may be branched and may include one or more cyclic hydrocarbon structures, a C6-C30 aryl group (optionally substituted by one or more substituents selected from halogens and C1-C4 alkyl groups), or a C7-C30 aralkyl group.

In a preferred embodiment, the hydrolysable silane includes tetra-, tri-or dialkoxy (preferably containing 1 to 4 carbon atoms) compounds

Representative examples of hydrolysable silanes according to formula (I) include tetra methoxysilane, tetra ethoxysilane, methyl triethoxysilane, methyl trimethoxy silane, dimethyl diethoxysilane, dimethyldimethoxy silane, diethyl diethoxysilane, diethyl dimethoxy silane, octadecyltriethoxysilane, and methyl trichlorosilane.

Particularly suitable are tetra ethoxysilane, tetra methoxysilane, methyl triethoxysilane, methyl trimethoxysilane, diethyl diethoxysilane and dimethyl diethoxysilane and the hydrolysates and condensates thereof.

Single compounds or mixtures of compounds or the hydrolysates and condensates thereof may be used with the proviso that not all hydrolysable groups have been consumed by hydrolysis and/or condensation. Particularly at least 2%, preferably at least 5%, more preferably at least 10% of the hydrolysable groups are still available for hydrolysation or condensation reactions.

In view of the above it is understood that in addition to the hydrolysable silanes the coating compositions may contain hydrolysates or condensates of the hydrolysable silanes, for example by a reaction between hydrolysable silanes or a reaction between the polymer composition and the hydrolysable silanes. Such reactions are typically suppressed by avoiding the presence of water or proton acids but the occurrence of such reactions does not reduce the performance of the coating composition if not all hydrolysable groups have been consumed by those reactions. Preferably, at least 2%, preferably at least 5%, more preferably at least 10% of the hydrolysable groups are still available for hydrolysation or condensation reactions.

The condensation and hydrolysation reactions may occur in the presence of water and/or a catalyst. Typically, the hydrolysation and/or condensation reactions only proceed slowly at room temperature and in the absence of proton acids but may proceed more rapidly or may only take place at elevated temperatures, for example temperatures greater than 40°C.

In a preferred embodiment, the coating composition comprises mixtures of hydrolysable silanes and/or their condensates, wherein at least one of the hydrolysable silanes can be represented by the formula (Ia):

SiG₄ (Ia)

wherein each G represents independently a hydrolysable group as described for the groups G above, with the proviso that the condensation product has unconsumed hydrolysable groups.

Mixtures of hydrolysable silanes are commercially available and are generally referred to as silane hard coats. Examples include those available under the trade designation PHC 587, from Momentive and Worlée Protect 1507 from Worlée-Chemie GmbH, Germany

The coating composition may comprise further additives. Examples include titanates, zirconates and aluminates having hydrolysable groups. Examples include tetra-methyl orthotitanate, tetra ethyl orthotitanate, tetra-iso-propyl orthotitanate, tetra-n-propyl orthotitanate, tetraethyl zirconate, tetra-iso-propyl zirconate, tetra-n-propyl zirconate, triisobutyl aluminate and the like.

The coating composition can contain further additives, such as wetting or spreading agents. These types of additives are often referred to as surfactants. Suitable surfactants typically include non-polar groups, such as a polysiloxane, and a polar, preferably non-ionic group. Examples include polysiloxane non-ionic surfactants. Of particular interest are trisiloxane non-ionic surfactant, hydroxyl endcapped and having ethylene oxide segments and/or propylene oxide segments. Further suitable examples include oligomeric polydimethylsiloxanes, hydroxyl endcapped and having pendant and/or alpha-omega ethylene oxide segments. Non-ionic polysiloxane surfactants useful in the composition of the invention are commercially available, for example under the trade designation SILWET (from Momentive Performance Materials).

The coating composition is typically dissolved or dispersed in an organic liquid. Suitable organic liquids, or mixtures of liquids can be selected from aliphatic alcohols (preferably containing 1 to 6 carbon atoms), such as methanol, ethanol, isoproylalcohol and n.butanol ; ketones such as acetone or methyl ethyl ketone; esters, such as ethyl acetate, methylformate and ethers, such as diethyl ether. Particularly preferred liquids include ethanol, isopropanol and methyl ethyl ketone.

The coating composition will typically contain between 1% and 50% by weight of solids (polymer).

### Preparation of coating compositions

For preparing coating compositions the silane-terminated polysiloxanes typically are combined with at least one hydrolysable silane as described above or hydrolysates or condensates thereof in an organic liquid.

In accordance with a particular embodiment, the coating compositions are prepared by blending the silane-terminated polysiloxane with the hydrolysable silane or hydrolysates or condensates thereof including the optional additives and are dispersed in an organic liquid or mixture of organic liquids. Water and catalyst may be added prior to the application of the coating composition before applying it to the substrate. Preferably, water (and catalyst) are added about 30 to 72 hours prior to application to the substrate such that the coating compositions undergoes partial hydrolysis and/or condensation before applying it to the substrate.

Typically, the amount of water will be between 0.1 and 20% by weight of the total composition, more preferably between 0.1 and 10% by weight. In addition to water, an organic or inorganic acid or base catalyst can be added to the coating composition. In an alternative embodiment, the catalyst can be applied separately to the substrate, for example as part of a primer coating or by spraying a catalyst composition on the substrate before or after application of the coating composition according to the invention.

Suitable organic acid catalysts include acetic acid, citric acid, formic acid, triflic acid and the like. Examples of inorganic acids include sulphuric acid, hydrochloric acid and the like. Examples of useful base catalysts include sodium hydroxide, potassium hydroxide and triethylamine. Organometallic catalysts can also be used. Examples include dibutyltindilaurate and tin di (2-ethylhexanoate).

The catalyst may generally be used in amounts between 0.01 and 10%, more preferably between 0.05 and 5% by weight of the total composition.

However, satisfying coating can also be achieved without adding water and/or catalysts simply by heat curing, for example as described below.

### Application of coating compositions

The coating compositions can be applied directly onto a surface of the substrate with or without using a primer. Primers may be used to improve adhesion of the coating composition to the surface. Suitable primers include primers for paints and coatings as is known in the art. Suitable commercially available examples include AP111 and 3M™ Adhesion Promoter 4298 (available from 3M), SHP 401 (available from Momentive) and Keim Silan Primer (alkoxyalkyl silane, available from Keim Paints). After drying and optional curing the primer the coating composition can then be applied onto the primer.

The coating composition is typically applied on a surface in amounts sufficient to produce a coating that provides soil and stain resistance and easy-clean properties. Typically the coating thickness after drying and curing is between 0.1 and 50 µ, preferably between 1 and 10µ.

A wide variety of coating methods can be used to apply the coating composition. Suitable methods of application include brushing, spraying, dipping, rolling, spreading, bar coating and the like. A preferred coating method for application of the coating composition includes spray application and bar coating.

A substrate to be coated can typically be contacted with the coating composition at room temperature (typically, about 15°C to about 30°C). Following application, the treated substrate can be dried and cured preferably at elevated temperature, e. g. at 40°C to 300°C and for a time sufficient to dry and cure e.g. from 10 minutes to 1 hour.

The coating composition can be used to provide a protective coating on a variety of coated or uncoated substrates.

It has been found that the coating compositions can be coated particularly well with good adherence on substrates including metals (e.g. brass, gold, silver, messing, copper, stainless steel), glass, ceramics, plywood, and plastics, in particular polycarbonates, polyamides, polyesters copolymers thereof and combinations thereof. Without being bound by theory it is believed that the reaction of the hydrolysable silanes with the polymer composition and reactions of the polymer composition with surface groups present on those particular surfaces during the curing provide improved adhesion of the coating. Therefore, an advantage of the polymer composition and coating compositions provided herein is their good adherence to surface described above. Preferred substrates are plywood, polycarbonates, steel and aluminium. Particular preferred articles include aluminium wheel rims, aluminium waste containers, plywood containing benches, chairs and wall panels, polycarbonate containing sound barriers.

Substrates coated with the coating compositions provided herein may have a high water repellency as in indicated by the static contact angle for water. For example, the coating may have a static contact angle against water of greater than 90, preferably higher than 95.

The coatings obtained with the coating compositions may further have good stain resistance. This can be indicated receding contact angle measurements. Typically substrates coated with the coating compositions provided herein may have a receding contact angle for water of greater than 60, preferably greater than 70.

Coated substrates provided herein may further have high soil resistance and are easy to clean. Soil does not attach to the coated surface because of the low adhesion values created by the coating. For example 180° peel values of not more than 0.6 N, preferably not more than 0.5 N may be obtained.

It has been found that coating compositions comprising a silane-terminated polysiloxane described above can be applied and cured into a thin protective layer on coated or uncoated hard surfaces. The cured compositions provide resistance to stain and soil. The cured compositions generally provide easy-to clean properties to a substrate and facilitate soil and dirt removal. These desirable properties may be maintained or substantially maintained over an extended exposure to outdoor weathering conditions, in particular exposure to UV or sun light. It is thus an advantage of the compositions and coatings provided herein that some ot all of the above described properties may be largely maintained despite extended exposure to Xenon light. Typically the wetting properties described above are maintained or deteriorate only slightly after 300 hours, preferably 600 hours, more preferably 1000 hours exposure to Xenon light. This indicates that the performance of the material can be maintained even after prolonged exposure to sun light.

### EXAMPLES

The following examples further illustrate the disclosure without the intention however to limit the disclosure thereto. All parts are by weight unless indicated otherwise.

### ABBREVIATIONS

| **Abbreviations** | **Product** |
|---|---|
| IPDI | Isophorone diisocyanate |
| BTMSPA | Bis-(3-trimethoxysilyl propyl)amine |
| BTMSPA-MA | Bis-(3-trimethoxysilyl propyl)amine-methylacrylate Michael adduct |
| PDMS | Polydimethyl siloxane |
| PDMS-1 | KF-6002: α,ω polydimethylsiloxane diol with about 43 SiO repeating units (MW 3200) from Shin-Etsu |
| PDMS-2 | Fluid ND 40D α,ω polydimethylsiloxane diamine, NH₂ equivalent weight 1327 from Wacker Chemie AG |
| APD | 3-Aminopropane-1,2-diol |
| IPTES | 3-Isocyanatopropyl triethoxysilane |
| MAPTMES | methacryloxypropyl trimethoxysilane |
| MA | Methyl acrylate |
| TMPTMA | trimethylolpropane triacrylate |
| MEK | 2-butanone |
| PHC 578B | Hydrolisable silane: silane-based hard coat composition 5% solids from Momentive Performance Chemicals Inc |
| BHT | 2,6-di- t.butyl-4-methylphenol |
| DABCO | 1,4 diazabicyclo [2.2.2]octane |
| DBTDL | dibutyl tindilaurate |
| DBU | 1,8 diazabicyclo [5.4.0] undec-7-ene |
| HEA | 2-hydroxyethyl acrylate |
| PET3A | pentaerythritol triacrylate, obtained as SR444D from Sartomer / Cray Valley |
| IPA | isopropanol, 2-propanol |
| THF | Tetrahydrofuran |
| REILLEX™ 402 | cross-linked poly-4-vinylpyridine from Vertellus Specialties Inc. |

### SYNTHESIS OF MATERIALS USED

### 1. Synthesis of polymers

### Polymer 1: PDMS-2/2 (BTMSPA-MA)

### Step 1: BTMSPA-MA Michael-adduct

A 100 ml reaction bottle was charged with 60.6 g BTMSPA, 55 g MA and 0.116 g DBU. The bottle was sealed and reacted for 16 hrs at 80°C in a pre-heated Launder-o-meter. The excess MA was distilled off with a Büchi rotary evaporator using waterjet vacuum. A clear light yellow semi-viscous liquid was obtained. NMR analysis confirmed quantitative BTMSPA conversion (99%).

### Step 2: PDMS-2/2 (BTMSPA-MA)

A 100 ml reaction flask, equipped with a magnetic stirrer, thermometer, reflux condenser and nitrogen blanket was charged with 23.89 g PDMS-2, 7.69 g BTMSPA-MA Michael adduct prepared in step 1, 0.31 g stannous octanoate catalyst and 31 g 1-hexanol respectively.

The mixture was first heated on a silicone oil bath for 2 hrs at 125°C.

Methanol was distilled off using a Dean-Stark condenser until the reaction mixture reached 160°C. After running the reaction for 5 hrs at 160°C another 0.31 g stannous octanoate catalyst was added. The reaction was continued for 10 hrs at 160°C to obtain a semi-viscous light yellow liquid with about 50% solids content.

### Polymer 2: PDMS-diacrylamide/2 BTMSPA

### Step 1: PDMS-diacrylamide

A 50 ml reaction flask, equipped with a magnetic stirrer and thermometer was charged with 13.27 g PDMS-2, 16.7 g ethylacetate, 8 mg BHT and 2.26 g Reillex-402. Then 1.13 g acryloyl chloride was slowly added via a syringe, resulting in a slight exotherm. The brownish slurry was stirred for 3 hrs at room temperature and then filtered through a Whatman paper filter. The excess acryloyl chloride and ethylacetate were distilled off with a Büchi rotary evaporator using waterjet vacuum. The structure was confirmed via IR spectroscopy.

### Step 2: PDMS-diacrylamide / 2 BTMSPA

A 100 ml reaction bottle was charged with 12.01 g PDMS-diacrylamide from step 1, 3.63 g BTMSPA and 1 drop stannous octanoate respectively. The bottle was sealed and reacted for 65 hrs at 80°C in a pre-heated Launder-o-meter.

NMR analysis confirmed the product structure and quantitative conversion of the PDMS-diacrylamide.

### Polymer 3: PDMS-diol-diacrylate/2 BTMSPA

### Step 1: PDMS-diol diacrylate

A 30 ml reaction vessel, equipped with a magnetic stirrer was charged with 16 g PDMS-1, 10 mg BHT and 2.07 g Reillex-402. Then 1.04 g acryloylchloride was slowly added via syringe. The mixture was stirred for 5 hrs at room temperature.

Another 0.75 g Reillex-402 and 0.38 g acryloyl chloride were added and the reaction was continued overnight (16 hrs). After addition of 40 g ethylacetate the reaction mixture was filtered through a Whatman paper filter. The excess acryloyl chloride and ethylacetate were distilled off with a Büchi rotary evaporator using waterjet vacuum. The structure of the obtained semi-viscous liquid was confirmed via IR spectroscopy to be PDMS-diol diacrylate.

### Step 2: PDMS-diol-diacrylate / 2 BTMSPA

A 50 ml 3-neck reaction flask equipped with a magnetic stirrer, thermometer and reflux condenser was charged with 9.92 g PDMS-diol diacrylate from step 1, 2.50 g BTMSPA, 6.2 mg BHT and 31 mg stannous octanoate respectively. The mixture was stirred and heated on a silicone oil bath to 90°C for 1 hr, after which complete conversion of the PDMS-diol acrylate was determined via IR spectroscopy.

### Polymer 4: (PDMS-1I / 2 IPDI / 2 PET3A) / 6 BTMSPA

### Step 1: PDMS-1 / 2IPDI/ 2 PET3A

A 250 ml reaction bottle was charged with 8.61 g IPDI, 62.08 g PDMS-1, 45.1 mg BHT, 60 g ethylacetate and 113 mg stannous octanoate. The bottle was sealed and reacted for 3 hrs in a pre-heated Launder-o-meter at 75°C. After cooling, 23.49 g PET3A was added and reacted for 6 hrs at 75°C. IR analysis showed that all isocyanate groups had been consumed.

### Step 2: (PDMS-1 / 2IPDI/ 2 PET3A) 6 BTMSPA

A 50 ml 3-neck reaction flask equipped with a magnetic stirrer, thermometer, calcium chloride tube and reflux condenser was charged with 23.3 g PDMS-1/ 2 IPDI / 2 PET3A from step 1, 6.82 g BTMSPA and 11.47 g ethylacetate. The reaction mixture was stirred and heated on a silicone oil bath to 85°C for 3 hrs. The reflux condenser was then replaced by a Dean-Stark condenser and ethylacetate was stripped off until the reaction mixture refluxed at 90°C. After running 4 hrs at 90°C, 1.71 g BTMSPA (25% original charge) was added. The reaction was continued for 16 hrs at 90°C.

### Polymer 5: PDMS-2 / 8 TMPTA / 20 BTMSPA

Polymer 5 was prepared in a one step reaction.

A 100 ml reaction bottle was charged with 5.31 g PDMS-2, 25.2 g THF, 4.74 g TMPTA, 5 mg BHT, 15.16 g BTMSPA and 13 mg stannous octanoate respectively. The bottle was sealed and reacted first for 3 hrs at 80°C and then 16 hrs at 85°C in a Launder-o-meter.

### Polymer 6: PDMS-2 / 4 TMPTA / 8 BTMSPA

### Step 1: PDMS-2 /4 TMPTA

A 100 ml reaction bottle was charged with 7.96 g PDMS-2, 20.6 g THF, 3.55 g TMPTA, 6 mg BHT and 29 mg stannous octanoate respectively. The bottle was sealed and reacted for 3 hrs in a pre-heated Launder-o-meter at 85°C.

### Step 2: PDMS-2/ 4 TMPTA/ 8 BTMSPA

To the reaction product of step 1, 9.09 g BTMSPA was added. The reaction bottle was sealed again and run for 16 hrs in a pre-heated Launder-o-meter at 85°C. An additional 0.91 g BTMSPA was added and the reaction continued for 6 hrs at 85°C. The product structure of polymer 6 was confirmed via NMR and IR spectroscopy.

### Polymer 7: (PDMS-1 / 2 IPDI / 2 HEA) / 2 BTMSPA

### Step 1: PDMS-1 / 2IPDI/ 2 HEA

A 100 ml reaction bottle was charged with 4.44 g IPDI, 32.00 g PDMS-1, 19.4 mg BHT, 26 g ethylacetate and 48 mg stannous octanoate respectively. The reaction bottle was sealed and run for 3 hrs in a Launder-o-meter at 70°C. After cooling 2.32 g HEA was added and the reaction continued for 16 hrs at 70°C. As still a small NCO-peak was visible in the IR-spectrum an extra 116 mg HEA (5% of initial charge) was added. After running another 4 hrs at 75°C the reaction was completed according to IR.

### Step 2: (PDMS-1 / 2 IPDI/ 2 HEA)/ 2 BTMSPA

A 100 ml reaction bottle was charged with 32.3 g reaction product from step 1 and 4.17 g BTMSPA. The reaction bottle was sealed and run for 65 hrs in a Launder-o-meter at 75°C. A yellowish semi-viscous solution was obtained. NMR analysis indicated > 90% conversion.

### Comparative composition C-1: PDMS-1 / 2 IPDI / 2 BTMSPA

In a three necked flask of 500 ml , fitted with a stirrer, thermometer, condenser and heating mantle, were placed 17.8 g (0.08 moles) IPDI, 20 g (0.04 moles) PDMS-I and 58 g dry MEK and 0.05 g stannous octanoate catalyst ( available from Aldrich) . The reaction mixture was heated up to 80°C under nitrogen and reacted for 6 hours. The mixture was cooled to about 30°C under nitrogen and 13.6 g (0.04 moles) bisilane were added. The reaction was continued at 60°C for 16 hours under nitrogen atmosphere. IR- analysis indicated no residual isocyanate. The reaction mixture was cooled to room temperature.

Comparative composition C1 has terminal silane groups falling under the general formula -E-N(R)-Q₄-Si (R₆)ₙY₃₋ₙ and provides a comparison with the terminal groups T which correspond to the general formula -E-CH₂CH₂-N(R)-Q₄- Si (R₆)ₙY₃₋ₙ.

### METHODS OF APPLICATION AND TESTING

### Coating compositions

Coating compositions were prepared by mixing the polymers with PHC 587B in a ratio of 1/10 (based on solids). The mixtures were further diluted with IPA to obtain a 12.5% solids solution. The compositions were allowed to condition at room temperature during 72 hours, prior to application to the substrate.

Compositions 1 to 7 were formed by blending polymers 1 to 7 with PHC 578B. Comparative composition C-Comp 1 was formed by blending comparative polymer (C-polymer) with hydrolysable silane.

### Coating procedure

The described materials were coated on standard float glass by use of a bar coater (K Bar available from R K Print Coat Instruments, UK) depositing a 24 p liquid coating. The coated samples were allowed to dry at room temperature for 10 minutes and then cured in an oven at 180°C for 15 minutes. After curing the panels were conditioned at RT. The samples were tested 24 hours after coating.

Respective data of tests shown in the following Examples and Comparative Examples are based on the following methods of measurement and evaluation criteria:

### Static Contact Angles (CA) and Receding Contact Angles

The treated substrates were tested for their static and receding contact angles versus water using a DSA100 contact angle analyzer commercially available from Krüss GmbH. The values are the mean values of 4 measurements and are reported in degrees.

### 180°Peel adhesion

180° peel adhesion was measured using a Rycobel peel tester, available from Thwing-Albert Instruments, Co. A piece of 3M Scotch™ Magic Tape 810 (19mm width) was applied to the coated substrate. The tape was rolled over four times with a stainless steel roll having 1 kg weight. The 180° peel was tested using a velocity of 0.3m/min. The results are expressed in Newton.

### Marker and graffiti paint resistance

### A. Materials used

### A.1. Marker stain tests

The stain repellency/removal was evaluated using 6 different permanent markers: Artline blue, Edding 500 black, Felt blue, Onyx black, Staedtler blue and Felt black. The results recorded are the averages of the results obtained with these markers.

### A.2. Graffiti paint

Removal of Graffiti paint type Montaza, Azul Nostromo Blue was evaluated.

### B. Tests

### 1. Stain repellency test (indicated as "Soil-1")

The marker stain and/or ink/paint repellency was rated on a scale of 1 to 5:
1: paint drops fully beaded up
5: paint wets the surface completely

### 2. Ease of stain removal (indicated as "Soil-2')

The ease of stain removal in the stain resistance test (via rubbing with a dry cotton cloth) was rated on a scale from 1 to 3:
1: easy removal
2: medium
3: difficult removal

### 3. Stain resistance (stain release method) (indicated as "Soil-3")

A 4 cm diameter circular template was filled with a permanent marker. The stain was dried for 30 minutes. Stain removal was tested by rubbing for 20 seconds with a dry cotton cloth.

The residual stains were then visually rated on the 8 point 3M Stain Release scale:
1: completely stained 8: no stain left

### Aging tests

### A. Xenon test

The coated samples were exposed to Xenon light, using a Senotest 150S instrument (available from Heraeus). The performance of the coated samples was evaluated after 100, 300, 600, 1000, 1300, 1500 and 2000 hours exposure.

After aging, the samples were stained with permanent marker and the stain repellency, ease-of-stain-removal and stain resistance were measured as indicated above.

### B. Climate Chamber test

Aging was done in a climate chamber, type VC 0057 (available from Vötsch Industrietechniek GmbH), at 80°C and 98% Relative Humidity for 24 hrs.

Coated glass samples were stained with permanent markers. On one set of these coated samples the stain repellency, ease-of-stain-removal and stain resistance (remaining stain) were measured as baseline. The results are indicated as 'soil initial'. Another set of these coated samples were aged in the climate chamber. The ease-of-stain removal and stain resistance were measured on those samples after removal from the climate chamber and conditioning for 24 hrs at room temperature.

### Examples

### Examples 1 to 7, Comparative example C-1 and Reference examples Ref-1 and Ref-2

In examples 1 to 7 and Comparative example C-1 standard float glass was coated with the coating compositions indicated in table 1 according to the general procedure. In reference example Ref-1 the coating composition only contained PHC 587B and no polymer. Reference example Ref-2 referred to untreated glass. All samples were tested for 180° peel. The results are given in table 1. The stain repellency, ease-of stain removal and stain resistance of the coatings were measured with different permanent markers. For set A the test was done with 5 markers (Edding 500 Black, Felt Blue, Onyx Black, Staedtler Blue and Felt Black). For set B the test was done with 3 markers (Artline Blue, Edding 500 Black and Felt Black). The results recorded in table 1 are the averages of the results obtained with the 5 or 3 markers.

**Table 1 Initial performance of coated samples**

| Ex | Coaing Composition | 180° peel | Marker Stain Test (average 5 markers) | | | | Contact Angles | |
|---|---|---|---|---|---|---|---|---|
| | | | Set | Soil-1 | Soil-2 | Soil-3 | CA | RCA |
| 1 | Comp-1 | 0.10 | A | 2.7 | 1.1 | 7.9 | 97 | 83 |
| 2 | Comp-2 | 0.12 | B | 1.3 | 1.0 | 8.0 | 100 | 86 |
| 3 | Comp-3 | 0.12 | A | 2.0 | 1.1 | 7.9 | 99 | 84 |
| 4 | Comp-4 | 0.09 | A | 1.9 | 1.0 | 8.0 | 100 | 85 |
| 5 | Comp-5 | 0.13 | A | 1.9 | 1.0 | 8.0 | 99 | 86 |
| 6 | Comp-6 | 0.14 | A | 1.9 | 1.1 | 8.0 | 100 | 85 |
| 7 | Comp-7 | 0.18 | B | 1.8 | 1.0 | 8.0 | 99 | 77 |
| C-1 | Comparative comp-1 | 0.13 | A | 2.0 | 1.0 | 8.0 | 100 | 82 |
| Ref-1 | PHC 587B | 1.5 | A | 4.4 | 2.6 | 5.6 | 95 | 81 |
| Ref-2 | / | 2.06 | A | 5.0 | 3.0 | 1.5 | NM* | NM* |

| | | | | | | | | |
|---|---|---|---|---|---|---|---|---|
| NM*: not measurable: drop spreads | | | | | | | | |

The coated samples were further tested after aging using the Xenon test and the Climate Chamber test.

### A. Xenon test:

The coated samples were subjected for several hours to the Xenon test. Static contact angles (CA) were measured after exposure. The results are given in table 2. Stain resistance against Artline blue permanent marker was evaluated on the aged samples.

The results are given in table 3.

**Table 2 Static contact angles after Xenon testing:**

| Hours | Ex 2 | Ex 3 | Ex 4 | Ex 5 | Ex 6 | Ex 7 | C-1 | Ref-1 |
|---|---|---|---|---|---|---|---|---|
| 0 | 100 | 99 | 100 | 100 | 100 | 99 | 100 | 95 |
| 100 | 99 | 99 | 99 | 101 | 101 | 99 | 100 | 94 |
| 300 | 99 | 101 | 103 | 102 | 102 | 99 | 97 | 90 |
| 600 | 97 | 99 | 101 | 101 | 102 | 97 | 95 | 91 |
| 1000 | 95 | 89 | 98 | 100 | 99 | 97 | 61 | 87 |
| 1300 | 92 | 88 | 99 | 97 | 98 | 86 | 50 | 74 |
| 1500 | 87 | 84 | 85 | 95 | 94 | 82 | 43 | 70 |
| 2000 | 88 | 76 | 86 | 93 | 92 | 79 | 45 | 72 |

The results show that the wettability of the coating according to this disclosure after 2000 hours irradiation has decreased less compared to comparative coatings.

**Table 3 Stain resistance test**

| | Ex 4 | Ex 5 | Ex 6 | Ex 7 | C-1 | Ref-1 |
|---|---|---|---|---|---|---|
| initial | | | | | | |
| Soil-1 | 1 | 1 | 1 | 1 | 1 | 4.5 |
| Soil-2 | 1 | 1 | 1 | 1 | 1 | 3 |
| Soil-3 | 8 | 8 | 8 | 8 | 8 | 8 |
| After 300h | | | | | | |
| Soil-1 | 1 | 1 | 1 | 1 | 2 | 5 |
| Soil-2 | 1 | 1 | 1 | 1 | 2 | 3 |
| Soil-3 | 8 | 8 | 8 | 8 | 8 | 8 |
| After 600h | | | | | | |
| Soil-1 | 1.5 | 1.5 | 1 | 1.5 | 2 | 5 |
| Soil-2 | 1 | 1 | 1 | 1 | 1.5 | 3 |
| Soil-3 | 8 | 8 | 8 | 8 | 8 | 8 |
| After 1500 | | | | | | |
| Soil-1 | 1 | 1 | 1 | 1 | 4 | 4.5 |
| Soil-2 | 1 | 1 | 1 | 1 | 3 | 3 |
| Soil-3 | 7.5 | 8 | 8 | 8 | 8 | 7 |

The results show that the repellency of a UV aged coating is superior to comparative or reference coatings.

## Claims

1. A silane terminated polysiloxane comprising a polysiloxane unit having from 5 to 250 -SiO- units and one or more terminal silane groups T of the general formula
-E-CH₂CH₂-N(R)-Q₄- Si (R₆)ₙY₃₋ₙ
wherein
E represents -O-C(=O)- or -NH-C(=O)- ,
R represents independently per unit H, an alkyl group or a group Q5-Si(R6)nY3-n, each Y independently represents a hydrolysable group and R6 represents an alkyl group or an aryl group and n is 0 or 1, and Q4 and Q5 represent a chemical bond or identical or different linking groups containing 1 to 10 carbon atoms which may contain sulphur, nitrogen and/or oxygen atoms and which do not contain a urethane group.

2. The polysiloxane of claim 1 having the general composition according to the formula: 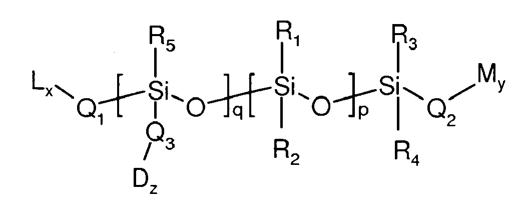 wherein Q1,Q2 and Q3 each independently represent a chemical bond or linking groups containing 1 to 10 carbon atoms, which may contain sulphur, nitrogen and/or oxygen atoms, R1, R2, R3, R4 and R5 independently represent an alkyl group or an aryl group; p represents an integer between 5 and 200 ; q is 0 or an integer between 1 and 50 and p+q is an integer between 5 and 250 ; x, y and z represent, independently from each other integers of 1 to 10,
and wherein each L, M and D independently represent H or a group T with the proviso that at least one of L, M or D is not H.

3. The polysiloxane according to any one of claims 1 or 2 having a composition according to the general formula 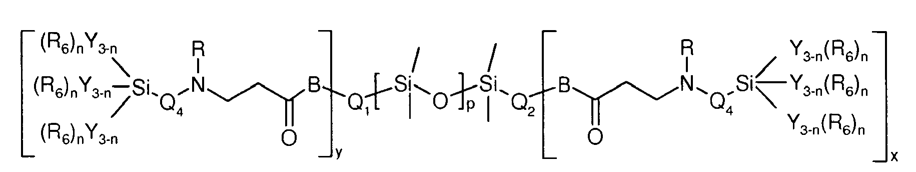 Wherein
B is O or NR₇ with R₇ being H or an alkyl group;
Y independently represents a hydrolysable group,
R is H or an alkyl group or a group -Q₅-Si (R₆)ₙY₃₋ₙ,
Q4 and Q5 represent a chemical bond or identical or different linking groups containing 1 to 10 carbon atoms which may contain sulphur, nitrogen and/or oxygen atoms and which do not contain a urethane group,
Q1 and Q2 independently represent a chemical bond or a linking group containing from 1 to 10 carbon atoms and which may further contain sulphur, nitrogen and/or oxygen atoms,
p is an integer between 5 and 200 and,
x and y are integers between 1 and 10.

4. The polysiloxane of any one of the preceding claims being the reaction product of one of the following reactions
a) a one step reaction of
i.) a polysiloxane having at least one terminal amine group, alcohol group or thiol group,
ii.) a compound having at least one α,β-unsaturated carbonyl group, optionally further comprising an isocyanate reactive group, and
iii.) a silane compound having a primary or secondary amino group and at least one hydrolysable group or
b) a multistep reaction first reacting i) and ii) followed by reaction with iii) or
c) a multistep reaction first reacting ii) and iii), followed by reaction with i)
d) a multistep reaction of i) with a multifunctional isocyanate, followed by reaction with ii) comprising an isocyanate reactive group, followed by reaction with iii)
wherein the reaction comprises at least one Michael addition reaction.

5. The polysiloxane according to any one of the preceding claims wherein the hydrolysable groups Y are independently selected from alkoxy, aryloxy, acyloxy, and halogens.

6. The polysiloxane according to any one of the preceding claims wherein the polysiloxane is substantially free of urethane groups.

7. A coating composition comprising
(a) the silane-terminated polysiloxane according to any one of claims 1 to 6, and
(b) at least one hydrolysable silane,
or a condensation product of a hydrolysation reaction of (a) or (b), or (a) and (b) with the proviso that the condensation product is such that not all hydrolysable groups have been consumed.

8. The coating composition according to claim 7 wherein the hydrolysable silane corresponds to the formula (I) :
QₙSiG₄₋ₙ (I)
wherein Q represents a hydrocarbon group that can optionally be substituted, G represents a hydrolysable group and n is 0, 1 or 2

9. Use of the silane-terminated polysiloxane according to any one of claims 1 to 6 for improving the UV stability of a silane-based coating.

10. Method of making a silane-terminated polysiloxane according to any one of claims 1 to 6 comprising reacting
i.) a polysiloxane having at least one terminal amine group, alcohol group or thiol group,
ii.) a compound having at least one α,β-unsaturated carbonyl group, further optionally comprising an isocyanate reactive group,
iii.) a silane compound having a primary or secondary amino group and at least one hydrolysable group,
according to one of the following reaction schemes:
a) a one step reaction of i.), ii.) and iii.);
b) a multistep reaction of first reacting i.) and ii.) followed by reacting iii.) with the reaction product of i.) and ii.);
c) a multistep reaction of first reacting ii.) and iii.), followed by reacting i.) with the reaction product of ii.) and iii.); and
d) a multistep reaction of i) with a multifunctional isocyanate, followed by reaction with ii) further comprising an isocyanate reactive group, followed by reaction with iii)
with the proviso that at least one of the reaction schemes comprises a Michael addition reaction.

11. The method according to claim 10 wherein the silane compound corresponds to the formula:
H₃₋ₕN-[(CH₂)ₛ- Si(R₆)ₙY₃₋ₙ]ₕ
wherein R6 represents an alkyl group of 1 to 4 carbon atoms or an aryl group, each Y independently represents a hydrolysable group, s is 1, 2, 3 or 4, h is 1 or 2 and n is 0 or 1.

12. The method according to any one of claims 10 to 11 wherein the compound having at least one α,β-unsaturated carbonyl group, comprises a mono-functional acrylate or a poly-functional acrylate selected from the group consisting of acrylic acid, acryloylchloride, acrylic anhydride, methylacrylate, trimethylolpropane triacrylate, ditrimethylolpropane tetraacrylate, dipentaerythritol pentaacrylate and ethoxylated trimethylolpropane triacrylate.

13. A method of providing a protective coating to a surface, comprising applying to the surface a composition comprising the coating composition of any one of claims 7 and 8 and subjecting the composition to heat-curing to obtain a coating.

14. A substrate having at least one surface containing a coating obtained by heat curing the coating composition of any one of claims 7 and 8.

15. The substrate according to claim 14 wherein the surface is selected from one of the following or combinations thereof: plywood, steel, aluminium, messing, silver, gold, glass, ceramics, polymeric material comprising a polymer selected from the groups consisting of polycarbonates, polyacrylates, polymethacrylates, polyesters, polyamides and copolymers thereof and combinations thereof.

## Patentansprüche

1. Silanterminiertes Polysiloxan, umfassend eine Polysiloxaneinheit mit 5 bis 250 -SiO-Einheiten und einer oder mehreren endständigen Silangruppen T der allgemeinen Formel -E-CH₂CH₂-N(R)-Q₄-Si(R₆)ₙY₃₋ₙ,
worin
E für -O-C(=O)- oder -NH-C(=O)- steht,
R unabhängig pro Einheit für H, eine Alkylgruppe oder eine Gruppe Q₅-Si(R₆)ₙY₃₋ₙ steht, jedes Y unabhängig für eine hydrolysierbare Gruppe steht und R₆ für eine Alkylgruppe oder eine Arylgruppe steht und n für 0 oder 1 steht und Q₄ und Q₅ für eine chemische Bindung oder gleiche oder verschiedene Verknüpfungsgruppen mit 1 bis 10 Kohlenstoffatomen, die Schwefel-, Stickstoff- und/oder Sauerstoffatome enthalten können und keine Urethangruppe enthalten, stehen.

2. Polysiloxan nach Anspruch 1 mit der allgemeinen Zusammensetzung gemäß der Formel: 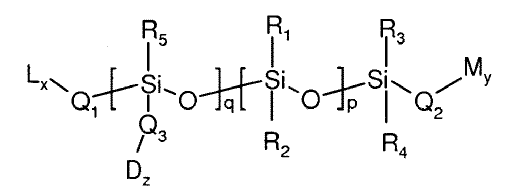 worin Q₁, Q₂ und Q₃ jeweils unabhängig für eine chemische Bindung oder Verknüpfungsgruppen mit 1 bis 10 Kohlenstoffatomen, die Schwefel-, Stickstoff- und/oder Sauerstoffatome enthalten können, stehen, R₁, R₂, R₃, R₄ und R₅ unabhängig für eine Alkylgruppe oder eine Arylgruppe stehen; p für eine ganze Zahl zwischen 5 und 200 steht; q für 0 oder eine ganze Zahl zwischen 1 und 50 steht und p+q für eine ganze Zahl zwischen 5 und 250 steht; x, y und z unabhängig voneinander für ganze Zahlen von 1 bis 10 stehen
und L, M und D jeweils unabhängig für H oder eine Gruppe T stehen, mit der Maßgabe, dass mindestens eine der Gruppen L, M und D nicht H ist.

3. Polysiloxan nach einem der Ansprüche 1 oder 2 mit einer Zusammensetzung gemäß der allgemeinen Formel 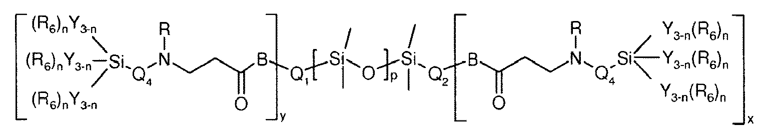 worin
B für O oder NR₇ steht, wobei R₇ für H oder eine Alkylgruppe steht;
Y unabhängig für eine hydrolysierbare Gruppe steht;
R für H oder eine Alkylgruppe oder eine Gruppe Q₅-Si(R₆)ₙY₃₋ₙ steht,
Q₄ und Q₅ für eine chemische Bindung oder gleiche oder verschiedene Verknüpfungsgruppen mit 1 bis 10 Kohlenstoffatomen, die Schwefel-, Stickstoff- und/oder Sauerstoffatome enthalten können und keine Urethangruppe enthalten, stehen,
Q₁ und Q₂ unabhängig für eine chemische Bindung oder eine Verknüpfungsgruppe mit 1 bis 10 Kohlenstoffatomen, die weiter Schwefel-, Stickstoff- und/oder Sauerstoffatome enthalten kann, stehen,
p für eine ganze Zahl zwischen 5 und 200 steht und
x und y für ganze Zahlen zwischen 1 und 10 stehen.

4. Polysiloxan nach einem der vorhergehenden Ansprüche, bei dem es sich um das Reaktionsprodukt einer der folgenden Reaktionen handelt:
a) eine einschrittige Reaktion von
i.) einem Polysiloxan mit mindestens einer endständigen Amingruppe, Alkoholgruppe oder Thiolgruppe,
ii.) einer Verbindung mit mindestens einer α,β-ungesättigten Carbonylgruppe, die gegebenenfalls ferner eine isocyanatreaktive Gruppe umfasst, und
iii.) einer Silanverbindung mit einer primären oder sekundären Aminogruppe und mindestens einer hydrolysierbaren Gruppe oder
b) eine mehrschrittige Reaktion, bei der man zuerst i) und ii) umsetzt und dann mit iii) umsetzt, oder
c) eine mehrschrittige Reaktion, bei der man zuerst ii) und iii) umsetzt und dann mit i) umsetzt, oder
d) eine mehrschrittige Reaktion von i) mit einem multifunktionellen Isocyanat, gefolgt von Reaktion mit ii), das eine isocyanatreaktive Gruppe umfasst, gefolgt von Reaktion mit iii),
wobei die Reaktion mindestens eine Michael-Additionsreaktion umfasst.

5. Polysiloxan nach einem der vorhergehenden Ansprüche, wobei die hydrolysierbaren Gruppen Y unabhängig aus Alkoxy, Aryloxy, Acyloxy und Halogenen ausgewählt sind.

6. Polysiloxan nach einem der vorhergehenden Ansprüche, wobei das Polysiloxan weitgehend frei von Urethangruppen ist.

7. Beschichtungszusammensetzung, umfassend
(a) das silanterminierte Polysiloxan nach einem der Ansprüche 1 bis 6 und
(b) mindestens ein hydrolysierbares Silan
oder ein Kondensationsprodukt einer Hydrolysereaktion von (a) oder (b) oder (a) und (b), mit der Maßgabe, dass das Kondensationsprodukt so beschaffen ist, dass nicht alle hydrolysierbaren Gruppen verbraucht sind.

8. Beschichtungszusammensetzung nach Anspruch 7, wobei das hydrolysierbare Silan der Formel (I) entspricht:
QₙSiG₄₋ₙ (I)
worin Q für eine Kohlenwasserstoffgruppe, die gegebenenfalls substituiert sein kann, steht, G für eine hydrolysierbare Gruppe steht und n für 0, 1 oder 2 steht.

9. Verwendung des silanterminierten Polysiloxans nach einem der Ansprüche 1 bis 6 zur Verbesserung der UV-Stabilität einer auf Silan basierenden Beschichtung.

10. Verfahren zur Herstellung eines silanterminierten Polysiloxans nach einem der Ansprüche 1 bis 6, bei dem man
i.) ein Polysiloxan mit mindestens einer endständigen Amingruppe, Alkoholgruppe oder Thiolgruppe,
ii.) eine Verbindung mit mindestens einer α,β-ungesättigten Carbonylgruppe, die gegebenenfalls ferner eine isocyanatreaktive Gruppe umfasst, und
iii.) eine Silanverbindung mit einer primären oder sekundären Aminogruppe und mindestens einer hydrolysierbaren Gruppe
gemäß einem der folgenden Reaktionsschemata umsetzt:
a) eine einschrittige Reaktion von i.), ii.) und iii).);
b) eine mehrschrittige Reaktion, bei der man zuerst i.) und ii.) umsetzt und dann iii.) mit dem Reaktionsprodukt von i.) und ii.) umsetzt;
c) eine mehrschrittige Reaktion, bei der man zuerst ii.) und iii.) umsetzt und dann i.) mit dem Reaktionsprodukt von ii.) und iii.) umsetzt; und
d) eine mehrschrittige Reaktion von i) mit einem multifunktionellen Isocyanat, gefolgt von Reaktion mit ii), das ferner eine isocyanatreaktive Gruppe umfasst, gefolgt von Reaktion mit iii),
mit der Maßgabe, dass mindestens eines der Reaktionsschemata mindestens eine Michael-Additionsreaktion umfasst.

11. Verfahren nach Anspruch 10, bei dem die Silanverbindung der folgenden Formel entspricht:
H₃₋ₕN-[(CH₂)ₛ-Si(R₆)ₙY₃₋ₙ]ₕ,
wobei R₆ für eine Alkylgruppe mit 1 bis 4 Kohlenstoffatomen oder eine Arylgruppe steht, Y jeweils unabhängig für eine hydrolysierbare Gruppe steht, s für 1, 2, 3 oder 4 steht, h für 1 oder 2 steht und n für 0 oder 1 steht.

12. Verfahren nach einem der Ansprüche 10 bis 11, bei dem die Verbindung mit mindestens einer α,β-ungesättigten Carbonylgruppe ein monofunktionelles Acrylat oder ein polyfunktionelles Acrylat aus der Gruppe bestehend aus Acrylsäure, Acryloylchlorid, Acrylsäureanhydrid, Methylacrylat, Trimethylolpropantriacrylat, Ditrimethylolpropantetraacrylat, Dipentaerythritpentaacrylat und ethoxyliertem Trimethylolpropantriacrylat umfasst.

13. Verfahren zur Bereitstellung einer Schutzbeschichtung auf einer Oberfläche, bei dem man auf die Oberfläche eine Zusammensetzung, die die Beschichtungszusammensetzung nach einem der Ansprüche 7 und 8 umfasst, aufbringt und die Zusammensetzung Wärmehärtung unterwirft, um eine Beschichtung zu erhalten.

14. Substrat mit mindestens einer Oberfläche mit einer durch Wärmehärten der Beschichtungszusammensetzung nach einem der Ansprüche 7 und 8 erhaltenen Beschichtung.

15. Substrat nach Anspruch 14, wobei die Oberfläche aus einer der folgenden oder Kombinationen davon ausgewählt ist: Sperrholz, Stahl, Aluminium, Messing, Silber, Gold, Glas, Keramik, polymerem Werkstoff, umfassend ein Polymer aus der Gruppe bestehend aus Polycarbonaten, Polyacrylaten, Polymethacrylaten, Polyestern, Polyamiden und Copolymeren davon und Kombinationen davon.

## Revendications

1. Polysiloxane à terminaison silane comprenant un motif polysiloxane ayant de 5 à 250 motifs -SiO- et un ou plusieurs groupes silane terminaux T représentés par la formule générale
-E-CH₂CH₂-N(R)-Q₄-Si(R₆)ₙY₃₋ₙ
dans laquelle
E représente -O-C(=O)- ou -NH-C(=O)-,
R représente indépendamment pour chaque motif H, un groupe alkyle ou un groupe Q₅-Si(R₆)ₙY₃₋ₙ,
chaque Y représente indépendamment un groupe hydrolysable et
R₆ représente un groupe alkyle ou un groupe aryle et
n vaut 0 ou 1 et
Q₄ et Q₅ représentent une liaison chimique ou des groupes de liaison identiques ou différents contenant 1 à 10 atomes de carbones qui peuvent contenir des atomes de soufre, d'azote et/ou d'oxygène et qui ne contiennent pas un groupe uréthane.

2. Polysiloxane selon la revendication 1 ayant la composition générale selon la formule : 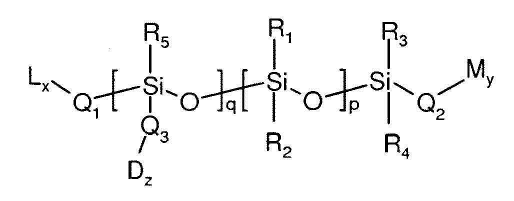 dans laquelle
Q₁, Q₂ et Q₃ représentent chacun indépendamment une liaison chimique ou un groupe de liaison contenant 1 à 10 atomes de carbone, qui peut contenir des atomes de soufre, d'azote et/ou d'oxygène,
R₁, R₂, R₃, R₄ et R₅ représentent chacun indépendamment un groupe alkyle ou un groupe aryle ;
p représente un nombre entier compris entre 5 et 200 ;
q est 0 ou un nombre entier compris entre 1 et 50 et
p + q est un nombre entier compris entre 5 et 250 ;
x, y et z représentent, indépendamment les uns des autres, des nombres entiers de 1 à 10, est
dans laquelle
chaque L, M et D représente indépendamment H ou un groupe T à condition qu'au moins l'un de L, M ou D ne soit pas H.

3. Polysiloxane selon l'une quelconque des revendications 1 ou 2 ayant une composition selon la formule générale 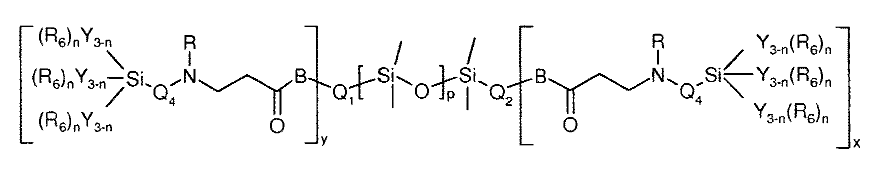 dans laquelle
B est O ou NR₇, R₇ étant H ou un groupe alkyle ;
Y représente indépendamment un groupe hydrolysable,
R est H ou un groupe alkyle ou un groupe -Q₅-Si(R₆)ₙY₃₋ₙ,
Q₄ et Q₅ représentent une liaison chimique ou des groupes de liaison identiques ou différents contenant 1 à 10 atomes de carbones qui peuvent contenir des atomes de soufre, d'azote et/ou d'oxygène et qui ne contiennent pas un groupe uréthane,
Q₁ et Q₂ représentent chacun indépendamment une liaison chimique ou un groupe de liaison contenant de 1 à 10 atomes de carbone et qui peut en outre contenir des atomes de soufre, d'azote et/ou d'oxygène,
p est un nombre entier compris entre 5 et 200 et
x et y sont des nombres entiers compris entre 1 et 10.

4. Polysiloxane selon l'une quelconque des revendications précédentes, lequel est le produit réactionnel de l'une des réactions suivantes
a) une réaction en une étape de
i.) un polysiloxane ayant au moins un groupe amine, groupe alcool ou groupe thiol terminal,
ii.) un composé ayant au moins un groupe carbonyle α,β-insaturé, comprenant en outre facultativement un groupe réactif avec les isocyanates, et
iii.) un composé silane ayant un groupe amino primaire ou secondaire et au moins un groupe hydrolysable ou
b) une réaction en plusieurs étapes faisant d'abord réagir i.) et ii.) suivis de la réaction avec iii.) ou
c) une réaction en plusieurs étapes faisant d'abord réagir ii.) et iii.), suivis de la réaction avec i.),
d) une réaction en plusieurs étapes de i.) avec un isocyanate multifonctionnel, suivi de la réaction avec ii.) comprenant un groupe réactif avec les isocyanates, suivi de la réaction avec iii.)
la réaction comprenant au moins une réaction d'addition de Michael.

5. Polysiloxane selon l'une quelconque des revendications précédentes dans lequel les groupes hydrolysables Y sont indépendamment choisis parmi les groupes alcoxy, aryloxy et acyloxy et les atomes d'halogène.

6. Polysiloxane selon l'une quelconque des revendications précédentes, le polysiloxane étant pratiquement exempt de groupes uréthane.

7. Composition de revêtement comprenant
(a) le polysiloxane à terminaison silane selon l'une quelconque des revendications 1 à 6 et
(b) au moins un silane hydrolysable,
ou un produit de condensation d'une réaction d'hydrolyse de (a) ou (b) ou (a) et (b) à condition que le produit de condensation soit tel que tous les groupes hydrolysables n'aient pas été consommés.

8. Composition de revêtement selon la revendication 7 dans laquelle le silane hydrolysable correspond à la formule (I) :
QₙSiG₄₋ₙ (I)
dans laquelle
Q représente un groupe hydrocarboné qui peut facultativement être substitué,
G représente un groupe hydrolysable et
n vaut 0, 1 ou 2.

9. Utilisation du polysiloxane à terminaison silane selon l'une quelconque des revendications 1 à 6 pour l'amélioration de la stabilité aux UV d'un revêtement à base de silane.

10. Procédé de fabrication d'un polysiloxane à terminaison silane selon l'une quelconque des revendications 1 à 6 comprenant la réaction de
i.) un polysiloxane ayant au moins un groupe amine, groupe alcool ou groupe thiol terminal,
ii.) un composé ayant au moins un groupe carbonyle α,β-insaturé, comprenant en outre facultativement un groupe réactif avec les isocyanates,
iii.) un composé silane ayant un groupe amino primaire ou secondaire et au moins un groupe hydrolysable,
selon l'un des schémas réactionnels suivants :
a) une réaction en une étape de i.), ii.) et iii).) ;
b) une réaction en plusieurs consistant à faire réagir d'abord i.) et ii.) et ensuite faire réagir iii.) avec le produit réactionnel de i.) et ii.) ;
c) une réaction en plusieurs étapes consistant à faire réagir d'abord ii.) et iii.), ensuite faire réagir i.) avec le produit réactionnel de ii.) et iii).) ; et
d) une réaction en plusieurs étapes de i.) avec un isocyanate multifonctionnel, suivi de la réaction avec ii.) comprenant en outre un groupe réactif avec les isocyanates, suivi de la réaction avec iii.)
à condition qu'au moins l'un des schémas réactionnels comprenne une réaction d'addition de Michael.

11. Procédé selon la revendication 10 dans lequel le composé silane correspond à la formule :
H₃₋ₕN-[(CH₂)ₛ-Si(R₆)ₙY₃₋ₙ]ₕ
dans laquelle
R₆ représente un groupe alkyle de 1 à 4 atomes de carbone ou un groupe aryle, chaque Y représente indépendamment un groupe hydrolysable,
s vaut 1, 2, 3 ou 4,
h vaut 1 ou 2 et
n vaut 0 ou 1.

12. Procédé selon l'une quelconque des revendications 10 à 11 dans lequel le composé ayant au moins un groupe carbonyle α,β-insaturé comprend un acrylate monofonctionnel ou un acrylate polyfonctionnel choisi dans le groupe constitué par l'acide acrylique, le chlorure d'acryloyle, l'anhydride acrylique, un méthacrylate, le triacrylate de triméthylolpropane, le tétraacrylate de ditriméthylolpropane, le pentaacrylate de dipentaérythritol et le triacrylate de triméthylolpropane éthoxylé.

13. Procédé consistant à doter une surface d'un revêtement protecteur, comprenant l'application sur la surface d'une composition comprenant la composition de revêtement selon l'une quelconque des revendications 7 et 8 et le fait de soumettre la composition à un thermodurcissement pour obtenir un revêtement.

14. Substrat ayant au moins une surface contenant un revêtement obtenu par thermodurcissement de la composition de revêtement selon l'une quelconque des revendications 7 et 8.

15. Substrat selon la revendication 14 dans lequel la surface est choisie parmi l'une des surfaces suivantes ou des associations de celles-ci : du contreplaqué, de l'acier, de l'aluminium, du laiton, de l'argent, de l'or, du verre, de la céramique, un matériau polymère comprenant un polymère choisi dans les groupes constitués par les polycarbonates, les polyacrylates, les polyméthacrylates, les polyesters, les polyamides et les copolymères de ceux-ci et les associations de ceux-ci.
